# EUROPÄISCHE PATENTSCHRIFT

(11) **EP 1 292 549 B1**
(45) Veröffentlichungstag und Bekanntmachung des Hinweises auf die Patenterteilung: **04.08.2004**
(21) Anmeldenummer: 01953783.6
(22) Anmeldetag: 28.05.2001
(51) Int. Cl.: C04B 37/00, G02B 7/00, B32B 18/00

(54) **MATERIALVERBUND SOWIE HERSTELLUNG UND VERWENDUNG DES MATERIALVERBUNDS**
MATERIAL COMPOSITE AND PRODUCTION AND USE OF THE MATERIAL COMPOSITE
MATERIAU COMPOSITE, SON UTILISATION ET SON MODE DE PRODUCTION

(30) Priorität: 29.05.2000 DE 10026651
(43) Veröffentlichungstag der Anmeldung: 19.03.2003
(73) Patentinhaber: Argillon GmbH, 96257 Redwitz (DE)
(72) Erfinder: JACOBITZ, Jochen, 96247 Michelau (DE); HÜGGING, Elisabeth, 96328 Küps (DE); KIESEWETTER, Hellmuth, 96257 Redwitz (DE); BAUER, Wolfgang, 96257 Redwitz (DE); MATHES, Wieland, 96247 Michelau (DE)
(74) Vertreter: Tergau & Pohl Patentanwälte
(86) Internationale Anmeldenummer: PCT/DE2001/002018
(87) Internationale Veröffentlichungsnummer: WO 2001/092184

(56) Entgegenhaltungen:
- EP-A- 0 327 049
- DE-A- 1 963 286
- DE-A- 2 307 191
- DE-A- 3 739 628
- DE-A- 19 502 006
- US-A- 3 590 468

## Beschreibung

Die Erfindung betrifft einen vakuumdichten und temperaturwechselbeständigen Materialverbund aus einem Aluminiumoxid-Saphir und einer Aluminiumoxid-Keramik. Die Erfindung betrifft weiter ein Verfahren zur Herstellung dieses Materialverbunds sowie eine Verwendung desselben.

Unter einem Aluminiumoxid-Saphir wird dabei die mit Titandioxid verunreinigte kristalline Korund-Struktur des Aluminiumoxids (α-Al₂O₃) verstanden. Unter einer Aluminiumoxid-Keramik wird hingegen ein keramischer Werkstoff verstanden, der im Wesentlichen durch Brennen von Tonen (Aluminiumsilikaten) hergestellt worden ist. Dieser keramische Werkstoff weist als wesentlichen Bestandteil Aluminiumoxid in der Korund-Modifikation auf, welches in einer Glasphase eingelagert ist. Daneben können weitere Metalloxide in dieser Keramik vorhanden sein.

Eine lichtdurchlässige Aluminiumoxid-Keramik findet bei-, spielsweise Verwendung bei Hochdruck-Gasentladungslampen, wie sie beispielsweise aus der EP-A-0 327 049 sowie aus der DE-A-23 07 191 zu entnehmen sind. In die in der Regel rohrförmige und als Entladungsgefäß vorgesehene Aluminiumoxid-Keramik muss ein metallischer Stromleiter geführt werden, der vakuumdicht mit der Aluminiumoxid-Keramik verbunden werden muss. Hierzu ist vorgesehen, auf die Aluminiumoxid-Keramik eine Metallisierungspaste aufzusintern, so dass eine Metallschicht erhalten wird. Der metallische Stromleiter wird dann beispielsweise mittels eines Hartlots zur Metallschicht vakuumdicht abgedichtet. Aus der US 3,590,468 ist ein Verfahren für eine Abdichtung zwischen einem reinen Aluminiumoxid und einem Metall beschrieben. Aus dem Stand der Technik ist daher lediglich ein Materialverbund aus einer Aluminiumoxid-Keramik und einem Metall, jedoch nicht ein Materialverbund aus einem Aluminiumoxid-Saphir und einer Aluminiumoxid-Keramik zu entnehmen.

Da die thermischen Ausdehnungskoeffizienten eines Aluminiumoxid-Saphirs und einer Aluminiumoxid-Keramik voneinander verschieden sind, gestaltet sich eine temperaturwechselbeständige feste Verbindung zwischen beiden Materialien äußerst schwierig. Eine zufriedenstellende, dauerhafte und vakuumdichte Verbindung zwischen den beiden genannten Materialien, welche beispielsweise bei einer lichtdurchgängigen Durchführung in ein Vakuum erforderlich wäre, ist bislang aus dem Stand der Technik nicht bekannt. Zahlreiche Versuche haben ergeben, dass alle bekannten Verbindungen dieser Materialien bei wechselnder Temperaturbeanspruchung nicht von Dauer sind.

Aufgabe der Erfindung ist es, einen vakuumdichten und temperaturwechselbeständigen Materialverbund aus einem Aluminiumoxid-Saphir und einer Aluminiumoxid-Keramik anzugeben, wobei der Aluminiumoxid-Saphir mit der Aluminiumoxid-Keramik fest und temperaturwechselbeständig miteinander verbunden ist. Weiter ist es Aufgabe der Erfindung, ein Verfahren zur Herstellung eines derartigen Materialverbunds anzugeben. Schließlich ist es ebenfalls Aufgabe der Erfindung, eine Verwendung für einen solchen Materialverbund anzugeben.

Die erstgenannte Aufgabe wird erfindungsgemäß dadurch gelost, dass der Aluminiumoxid-Saphir und die Aluminiumoxid-Keramik über eine erste und über eine zweite Verbindungsschicht miteinander versintert sind, wobei die erste Verbindungsschicht der Aluminiumoxid-Keramik benachbart ist und ein Mangan-Silikat-Glas umfasst, das mindestens eines der Metalle aus der Gruppe Molybdän, Wolfram, Palladium und Platin enthält, und wobei die zweite Verbindungsschicht dem Aluminiumoxid-Saphir benachbart ist und ein Mangan-Silikat-Glas umfasst. Hierbei kann das Mangan-Silikat-Glas der ersten Verbindungsschicht Aluminiumoxid und/oder Titandioxid enthalten. Das Mangan-Silikat-Glas der zweiten Verbindungsschicht enthält Aluminiumoxid und/oder Titandioxid, wobei der Gewichtsanteil der Oxide Aluminiumoxid und Titandioxid im Mangan-Silikat-Glas der zweiten Verbindungsschicht insgesamt höher ist als im Mangan-Silikat-Glas der ersten Verbindungsschicht.

Die Erfindung geht dabei von der Überlegung aus, dass durch die Einbringung von Metallen in das Mangan-Silikat-Glas eine Anpassung des thermischen Ausdehnungskoeffizienten der ersten Verbindungsschicht an den thermischen Ausdehnungskoeffizienten der Aluminiumoxid-Keramik vorgenommen werden kann. Der thermische Ausdehnungskoeffizient von Mangan-Silikat-Glas als solchem wiederum ähnelt dem thermischen Ausdehnungskoeffizienten des Aluminiumoxid-Saphirs. Insofern wird über die erste und über die zweite Verbindungsschicht der thermische Ausdehnungskoeffizient des Aluminiumoxid-Saphirs allmahlich an den thermischen Ausdehnungskoeffizienten der Aluminiumoxid-Keramik angeglichen. Die bei Temperaturwechselbeanspruchung auftretenden Spannungen an den Materialverbindungsstellen werden verringert.

Umfangreiche Untersuchungen haben nun weiter ergeben, dass durch das Anreichern des Mangan-Silikat-Glases der ersten Verbindungsschicht mit mindestens einem der genannten Metalle beim Aufsintern auf die Aluminiumoxid-Keramik eine feste Verzahnung und eine Anglasung der ersten Verbindungsschicht mit der Aluminiumoxid-Keramik stattfindet. Auch zwischen der ersten Verbindungsschicht und der zweiten Verbindungsschicht findet sowohl eine Verzahnung als auch eine Anglasung der beiden Verbindungsschichten miteinander statt. Durch den hohen Glasanteil in der zweiten Verbindungsschicht entsteht beim Sintern in der Grenzschicht zwischen dem Aluminiumoxid-Saphir und der zweiten Verbindungsschicht ein Oberflächenmischkristall, d.h. eine dauerhafte chemische Verbindung.

Wie Untersuchungen gezeigt haben, platzt bei Weglassen der ersten Verbindungsschicht der Aluminiumoxid-Saphir bei Temperaturwechselbeanspruchung von der Aluminiumoxid-Keramik ab. Wird dagegen auf die zweite Verbindungsschicht verzichtet, so haftet der Aluminiumoxid-Saphir erst gar nicht an dem mit Metall angereicherten Mangan-Silikat-Glas der ersten Verbindungsschicht.

Wird der Aluminiumoxid-Saphir über die erste und über die zweite Verbindungsschicht in der beschriebenen Art und Weise mit der Aluminiumoxid-Keramik versintert, so widersteht ein derartiger Materialverbund einer Temperaturwechselbelastung in einem weiten Bereich. Bei Temperaturwechselbelastungen zwischen -60 °C und +200 °C konnte kein Aufbrechen des Materialverbunds mehr festgestellt werden.

In einer vorteilhaften Ausgestaltung der Erfindung beträgt die Summe der Anteile der Metalle im Mangan-Silikat-Glas der ersten Verbindungsschicht 65 bis 85 Gew.-%. Liegt der Anteil der genannten Metalle innerhalb dieses Bereiches, so kann der thermische Ausdehnungskoeffizient der ersten Verbindungsschicht an den thermischen Ausdehnungskoeffizienten der Aluminiumoxid-Keramik gängigster Zusammensetzung angepasst werden, ohne dass die Bindung der ersten Verbindungsschicht mit der Aluminiumoxid-Keramik verringert werden würde.

Weiter von Vorteil ist es, wenn das Mangan-Silikat-Glas der ersten Verbindungsschicht zusätzlich einen Anteil von bis zu 6 Gew.-% an Aluminiumoxid und/oder Titandioxid umfasst. Durch einen solchen Anteil kann wiederum die Verbindung der ersten Verbindungsschicht mit der Aluminiumoxid-Keramik verbessert werden.

In einer weiteren vorteilhaften Ausgestaltung umfasst das Mangan-Silikat-Glas der zweiten Verbindungsschicht einen Anteil von bis zu 30 Gew.-%, insbesondere von 15 bis 25 Gew.-%, an Aluminiumoxid und/oder Titandioxid. Durch die Zugabe eines derartigen Anteils zu dem Mangan-Silikat-Glas der zweiten Verbindungsschicht kann der thermische Ausdehnungskoeffizient der zweiten Verbindungsschicht variiert werden und insofern die Temperaturwechselbeständigkeit des Materialverbunds hinsichtlich verschiedener Anteile an Verunreinigungen in dem Aluminiumoxid-Saphir und hinsichtlich verschiedenster Zusammensetzungen der Aluminiumoxid-Keramik optimiert werden.

Die zweitgenannte Aufgabe bezuglich des Herstellens des eingangs genannten Materialverbunds wird erfindungsgemäß dadurch gelöst, dass a) eine erste Siebdruckpaste hergestellt wird durch a1) Mischen des Pulvers eines Mangan-Silikat-Glases mit einem Pulver mindestens eines der Metalle aus der Gruppe, die Molybdän, Wolfram, Palladium und Platin enthält, zu einer Pulvermischung und a2) Versetzen der Pulvermischung mit einem Suspensionsmittel und/oder mit einem Klebemittel, dass b) eine zweite Siebdruckpaste hergestellt wird durch b1) Versetzen eines Pulvers eines Mangan-Silikat-Glases, welches Aluminiumoxid und/oder Titandioxid in einem höheren Anteil als das erste Mangan-Silikat-Glas enthält, mit einem Suspensionsmittel und/oder mit einem Klebemittel, dass c) durch Siebdruck der ersten und der zweiten Siebdruckpaste eine Materialfolge Aluminiumoxid-Keramik, erste Verbindungsschicht, zweite Verbindungsschicht der Aluminiumoxid-Saphir hergestellt wird, und dass abschließend d) ein Brennvorgang bei 1200 bis 1500 °C erfolgt.

Das Pulver des Mangan-Silikat-Glases kann entweder als fertiges Produkt käuflich im Handel erworben werden oder aber durch Mischen der Pulver von Braunstein MnO₂ und Kieselsäure oder Siliziumdioxid SiO₂, Aufschmelzen der Pulvermischung, Erstarren der Schmelze und abschließendes Mahlen der erstarrten Schmelze selbst hergestellt werden. Die Gewichtsanteile betragen in der Pulvermischung für MnO₂ 55-63 % und für SiO₂ 45-37 %.

Beim Herstellen der Pulvermischung für die erste Siebdruckpaste werden die Pulver des Mangan-Silikat-Glases und mindestens eines der erwähnten Metalle innig zu der Pulvermischung vermischt.

Die Zugabe eines Suspensions- und/oder eines Klebemittels zu der Pulvermischung bzw. zu dem Pulver ist notwendig, um eine siebdruckfähige Siebdruckpaste aus den Pulvern herstellen zu können. Durch den Siebdruck ist eine gleichmäßige Auftragung mit einer Schichtdicke definierter Stärke der späteren Zwischenschichten in einfacher Art und Weise möglich. Zum Herstellen des Materialverbunds kann zunächst auf die Aluminiumoxid-Keramik durch Siebdruck die erste und anschließend die zweite Siebdruckpaste aufgetragen werden. Abschließend wird der Aluminiumoxid-Saphir aufgelegt, und die auf diese Art und Weise entstandene Schichtenabfolge bei 1200 bis 1500 °C gebrannt, d.h. versintert. Selbstverständlich ist auch die umgekehrte Reihenfolge der Verfahrensabläufe möglich, d.h. dass auf den Aluminiumoxid-Saphir zunächst die zweite und anschließend die erste Siebdruckpaste aufgetragen und anschließend die Aluminiumoxid-Keramik aufgelegt wird. Da in der Regel bei einem derartigen Materialverbund jedoch die Aluminiumoxid-Keramik gegenüber dem Aluminiumoxid-Saphir als größeres Werkstück vorliegt, ist die erstgeschilderte Vorgehensweise in der Regel einfacher zu bewerkstelligen.

Neben den bereits geschilderten Vorteilen hinsichtlich der in den Patentansprüchen 6 bis 8 erwähnten spezifischen Gewichtsanteilen der Metalle oder von Aluminiumoxid und Titandioxid (für welches als Ausgangssubstanz auch ein Titanhydrid verwendet werden kann), ist es hinsichtlich des Verfahrens weiter vorteilhaft, wenn nach dem Siebdruck der ersten Siebdruckpaste und/oder nach dem Siebdruck der zweiten Siebdruckpaste jeweils ein separater Brennvorgang bei 1200 bis 1500 °C erfolgt. Auf diese Art und Weise können Lösemitteleffekte zwischen den beiden aufgetragenen Siebdruckpasten vermieden werden.

Von Vorteil hinsichtlich der Verarbeitung ist es, wenn für das Pulver des Mangan-Silikat-Glases ein Pulver mit einer mittleren Korngröße von weniger als 10 µm, insbesondere von weniger als 2 µm verwendet wird.

Weiter ist es aus dem selben Grund vorteilhaft, wenn das Pulver eines oder mehrerer der genannten Metalle mit einer mittleren Korngröße von weniger als 15 µm, insbesondere von weniger als 5 µm verwendet wird.

Hinsichtlich der Siebdruckpaste ist es weiter von Vorteil, wenn als Suspensionsmittel Pflanzenöl oder Terpineolöl verwendet wird. Als Klebemittel hat sich als vorteilhaft Ethylzellulose erwiesen. Die genannten Zusätze sind käuflich erhältlich und es entstehen beim Brennvorgang keine die Umwelt schädigenden Zersetzungsprodukte.

Hinsichtlich der Dauerhaftigkeit und Temperaturwechselbeständigkeit des Materialverbunds hat es sich als günstig erwiesen, wenn die erste Siebdruckpaste mit einer Dicke von 2 bis 20 µm und die zweite Siebdruckpaste mit einer Dicke von 2 bis 200 µm aufgetragen wird.

Die letztgenannte Aufgabe wird erfindungsgemäß dadurch gelöst, dass der Materialverbund zum Einsetzen eines Fensters aus dem Aluminiumoxid-Saphir in ein Gehäuse für einen lichtzündbaren Thyristor verwendet wird. Ein lichtzündbarer Thyristor wird - wie der Name bereits ausdrückt - nicht durch ein Spannungssignal, sondern durch Licht geschaltet oder gezündet. Ein Thyristor wird üblicherweise zum Schalten von hohen Strömen verwendet. Ein Thyristor als ein sogenannter Leistungshalbleiter wird hierzu in der Regel zwischen zwei metallische Kontaktstücke in ein Gehäuse mit einer umlaufenden Wandung aus einer isolierenden Aluminiumoxid-Keramik eingesetzt. Die Aluminiumoxid-Keramik dient dabei zur elektrischen Isolation der an den beiden Polen des Thyristors, d.h. an den beiden metallischen Kontaktstücken anliegenden hohen elektrischen Spannung. Das Gehäuseinnere ist in der Regel evakuiert.

Für einen in ein derartiges Gehäuse eingebauten lichtzündbaren Thyristor besteht nun das Problem der Einkopplung von Licht durch das Gehäuse hindurch an die lichtempfindliche Stelle des Thyristors. Zur Einkopplung bietet sich hierbei ein in dem Gehäuse angeordnetes Fenster aus einem Aluminiumoxid-Saphir an, an welchen von außen ein Lichtwellenleiter herangeführt ist. Da das Gehäuse im Inneren evakuiert ist und zudem nach Einsetzen des Thyristors einer oder beide der genannten Kontaktstücke mit der Wandung aus Aluminiumoxid-Keramik verlötet werden muss, muss der Materialverbund zwischen dem Fenster aus dem Aluminiumoxid-Saphir und dem Gehäuse dauerhaft, fest, vakuumdicht und temperaturwechselbeständig sein. Aus diesem Grund bietet sich genau für eine derartige Verwendung der beschriebene Materialverbund an.

In vorteilhafter Weise wird für diese Verwendung das Fenster aus dem Aluminiumoxid-Saphir in den Teilbereich des Gehäuses eingesetzt, welcher aus Aluminiumoxid-Keramik besteht. Hierzu ist das Fenster an seinen Randbereichen über die erste und die zweite Verbindungsschicht in der beschriebenen Art und Weise mit der Aluminiumoxid-Keramik fest versintert.

In einer weiteren vorteilhaften Ausgestaltung der Verwendung wird das Fenster in einen Teilbereich des Gehäuses aus einem ersten Metall eingesetzt. Dieser Teilbereich kann beispielsweise einer der genannten metallischen Kontaktstücke sein. Hierzu ist das Fenster an seinen Randbereichen über die erste und die zweite Verbindungsschicht fest mit einem ersten Materialstück aus Aluminiumoxid-Keramik verbunden und das erste Materialstück über ein Metalllot fest mit dem ersten Metall des Gehäuse-Teilbereichs verlötet. Der Materialverbund wird hierbei also zur Verbindung des Fensters aus dem Aluminiumoxid-Saphir mit dem ersten Metall des Gehäuse-Teilbereichs verwendet. Die Verbindung zwischen der Aluminiumoxid-Keramik des ersten Materialstücks mit dem ersten Metall des Gehäuse-Teilbereichs ist dabei an sich bekannt und entspricht der Methode, wie auch der metallische Teilbereich des Gehäuses oder die metallischen Kontaktstücke des Gehäuses mit der umlaufenden Wandung aus der Aluminiumoxid-Keramik verlötet werden.

In einer weiteren vorteilhaften Ausgestaltung der Verwendung ist die Aluminiumoxid-Keramik des ersten Materialstücks über ein Metalllot fest mit einem zweiten Materialstück aus einem zweiten Metall verbunden und das zweite Materialstück über ein Metalllot mit dem ersten Metall des Gehäuse-Teilbereichs verlötet. Auf diese Art und Weise sind die thermischen Ausdehnungskoeffizienten des Fensters aus dem Aluminiumoxid-Saphir und des ersten Metalls des Gehäuse-Teilbereichs über das erste und das zweite Materialstück ausgeglichen. Über das erste und das zweite Materialstück findet ein allmählicher Übergang des thermischen Ausdehnungskoeffizienten des Aluminiumoxid-Saphirs zu dem thermischen Ausdehnungskoeffizienten des ersten Metalls statt.

Als Metalllot eignet sich insbesondere ein Silber/Kupfer-Eutektikumslot (L-Ag72, DIN 8513), wobei die Verwendung eines anderen Lotes ebenso möglich ist.

Die metallischen Kontaktstücke eines Gehäuses zur Aufnahme eines Leistungshalbleiters sind in der Regel aus Kupfer. Hinsichtlich einer guten Verlötung des zweiten Materialstücks mit dem metallischen Teilbereich des Gehäuses ist es von Vorteil, wenn das zweite Metall eine Nickel/Eisen-Legierung ist.

In einer weiteren vorteilhaften Ausgestaltung der Verwendung sind das erste und das zweite Materialstück unter einem Winkel derart miteinander verbunden, dass bei Temperaturveränderung auftretende Längendifferenzen des Teilbereichs aus dem ersten Metall und des Fensters aus dem Aluminiumoxid-Saphir über Relativbewegungen des ersten und des zweiten Materialstücks zueinander im Wesentlichen ohne Belastung der Verbindungsstellen ausgeglichen werden.

Es entsteht durch die "Winkelverbindung" eine Hebelkonstruktion, die Relativbewegungen des ersten und des zweiten Materialstücks zueinander zulässt. Durch die unterschiedlichen thermischen Ausdehnungskoeffizienten von Aluminiumoxid-Saphir und Metall bei Temperaturwechselbeanspruchung auftretende Längendifferenzen werden dann über Relativbewegungen des ersten und des zweiten Materialstücks zueinander ausgeglichen. Die Verbindung des Fensters mit dem Metall des metallischen Teilbereichs selbst wird verringerten mechanischen Belastungen ausgesetzt. Auf diese Art und Weise hält die Verbindung des Fensters aus dem Aluminiumoxid-Saphir mit dem Metall des metallischen Teilbereichs des Gehäuses auch erhöhte Temperaturwechselbelastungen, die insbesondere beim Verlöten der metallischen Teilbereiche mit den Teilbereichen des Gehäuses aus Aluminiumoxid-Keramik auftreten, stand.

Ausführungsbeispiele der Erfindung werden anhand einer Zeichnung näher erläutert. Dabei zeigen:
- FIG 1: in einem Schnitt einen Materialverbund aus einem Aluminiumoxid-Saphir und einer Aluminiumoxid-Keramik,
- FIG 2: schematisch das Herstellungsverfahren für einen Materialverbund gemäß Figur 1,
- FIG 3: in teilweise aufgebrochener Darstellung und perspektivisch ein Gehäuse für einen lichtzündbaren Thyristor mit einem in ein metallisches Kontaktstück eingesetzten Fenster zur Durchführung von Licht,
- FIG 4: in einem Schnitt gemäß Figur 3 die Verbindung des eingesetzten Fensters aus Aluminiumoxid-Saphir mit dem metallischen Kontaktstück und
- FIG 5: in einem Schnitt ein Fenster aus AluminiumoxidSaphir, welches in eine Aluminiumoxid-Keramik einer umlaufenden Isolierwandung eines Gehäuses für einen lichtzündbaren Thyristor eingesetzt ist.

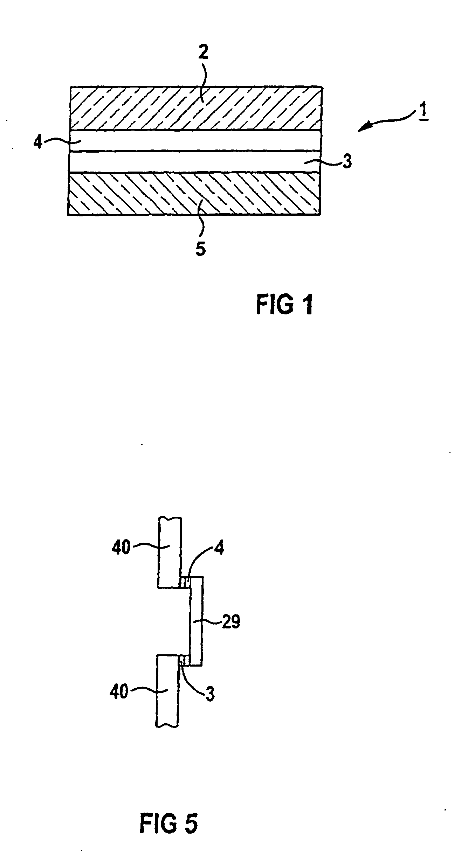

Figur 1 zeigt in einem Schnitt einen Materialverbund 1 mit einer Aluminiumoxid-Keramik 5, welche über eine erste Verbindungsschicht 3 und eine zweite Verbindungsschicht 4 mit einem Aluminiumoxid-Saphir 2 verbunden ist. Die erste Verbindungsschicht 3 umfasst ein Mangan-Silikat-Glas, welches 70 Gew.-% an eingelagertem Molybdän aufweist. Die zweite Verbindungsschicht 4 umfasst ebenfalls ein Mangan-Silikat-Glas, welches jedoch 20 Gew.-% an eingelagertem Aluminiumoxid aufweist. Der gezeigte Materialverbund 1 ist durch Versintern der einzelnen Materialien miteinander hergestellt. Dabei tritt zwischen dem Aluminiumoxid-Saphir 2 und der zweiten Verbindungsschicht 4 sowie zwischen der ersten Verbindungsschicht 3 und der zweiten Verbindungsschicht 4 sowohl eine Verzahnung der Materialien als auch eine teilweise Anglasung auf. Die Aluminiumoxid-Keramik 5 ist nach dem Sintervorgang mit der ersten Verbindungsschicht 3 über einen gebildeten Oberflächenmischkristall fest verbunden.

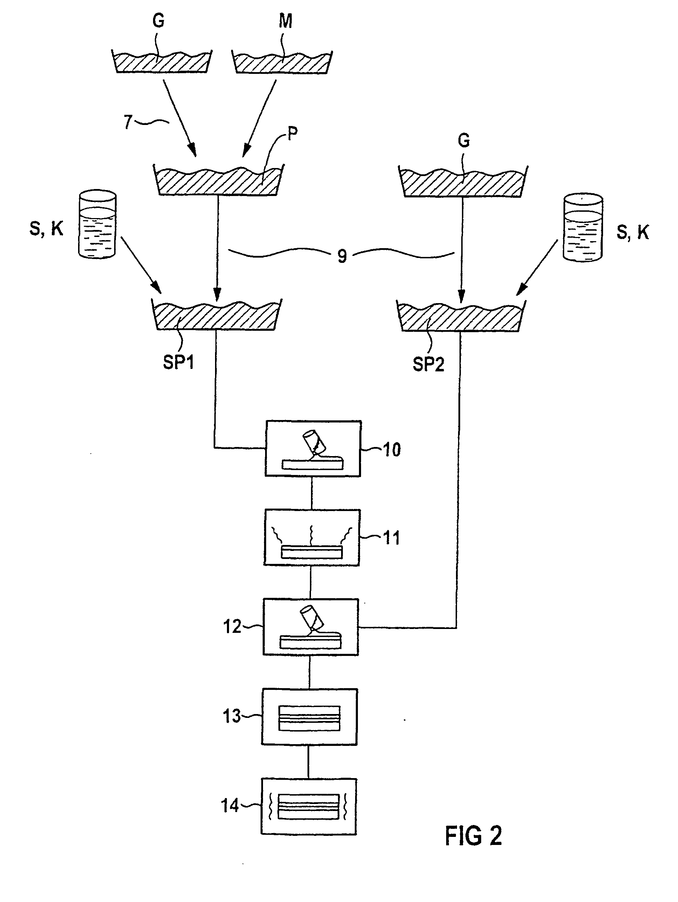

In Figur 2 ist schematisch das Herstellungsverfahren für einen Materialverbund gemäß Figur 1 dargestellt. Hierbei werden zunächst ein Pulver G eines Mangan-Silikat-Glases sowie ein Pulver M eines oder mehrerer der Refraktärmetalle Molybdän, Wolfram, Palladium oder Platin bereit gestellt. Durch Mischen und Sieben der Pulver G und M wird eine Pulvermischung P hergestellt. Da das Pulver eines Mangan-Silikat-Glases käuflich erhältlich ist, ist die Herstellung desselben nicht näher dargestellt. Ein solches Pulver kann jedoch, wie bereits erwähnt, aus Braunstein MnO₂ und kristallinem Siliziumdioxid SiO₂ hergestellt werden.

Durch Versetzen 9 der Pulvermischung P mit einem Suspensions- und Klebemittel S bzw. K wird eine erste Siebdruckpaste SP1 hergestellt. Durch Versetzen des Pulvers G des Mangan-Silikat-Glases mit einem Suspensions- und Klebemittel S bzw. K wird weiter eine zweite Siebdruckpaste SP2 hergestellt.

Mittels Siebdrucks 10 wird die erste Siebdruckpaste SP1 auf eine Aluminiumoxid-Keramik aufgetragen. Anschließend wird die Aluminiumoxid-Keramik mit der aufgetragenen ersten Siebdruckpaste SP1 bei einer Temperatur von 1300 °C gebrannt 11. Im Anschluss an diesen Brennvorgang 11 wird mittels Siebdruck die zweite Siebdruckpaste SP2 auf die durch den Brennvorgang 11 aus der ersten Siebdruckpaste SP1 hervorgegangene erste Verbindungsschicht aufgebracht 12. Anschließend wird der Aluminiumoxid-Saphir aufgelegt 13.

Die entstandene Materialabfolge wird schließlich durch einen abschließenden Brennvorgang 15 wiederum bei 1300 °C miteinander versintert.

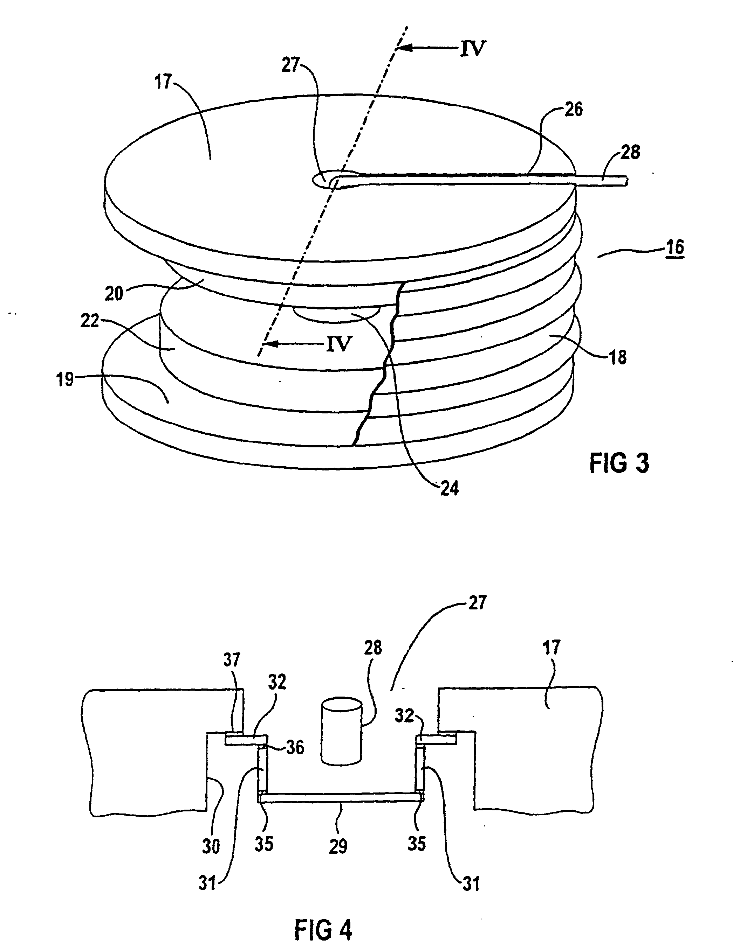

In Figur 3 ist in teilweise aufgebrochener Darstellung perspektivisch ein Gehäuse 16 für einen Leistungshalbleiter dargestellt. Das Gehäuse 16 weist einen metallischen Gehäusedeckel 17 auf, welcher durch eine Isolierwandung 18 von einem metallischen Gehäuseboden 19 elektrisch isoliert ist. Der Gehäusedeckel 17 und der Gehäuseboden 19 sind aus Kupfer hergestellt, dessen Oberfläche vernickelt ist. Sowohl der Gehäusedeckel 17 als auch der Gehäuseboden 19 sind jeweils als ein metallisches Kontaktstück ausgebildet und weisen hierzu jeweils eine in das Gehäuseinnere ragende Verdickung 20 bzw. 22 zur Aufnahme des Leistungshalbleiters auf. Über die Verdickungen 20 und 22 ist als Leistungshalbleiter ein lichtzündbarer Thyristor 24 zwischen Gehäusedeckel 17 und Gehäuseboden 19 eingeklemmt. Zur Spannungsisolation von Gehäusedeckel 17 gegenüber dem Gehäuseboden 19 ist die Isolierwandung 18 aus einer Aluminiumoxid-Keramik gefertigt.

Zum Zünden des lichtzündbaren Thyristors 24 weist der Gehäusedeckel 17 eine Bohrung 27 auf, in welche (in Figur 3 nicht ersichtlich) ein Fenster aus einem Aluminiumoxid-Saphir eingesetzt ist. Über eine in den Gehäusedeckel 17 eingebrachte Vertiefung 26 ist ein Lichtwellenleiter 28 geführt, dessen Ausgang vor dem in der Bohrung 27 eingesetzten Fenster aus dem Aluminiumoxid-Saphir endet. Das aus dem Lichtwellenleiter 28 austretende Licht gelangt über das Fenster aus dem Aluminiumoxid-Saphir in das Innere des Gehäuses 16 und trifft dort auf die lichtempfindliche Stelle des lichtzündbaren Thyristors 24. Durch Senden eines Lichtimpulses über den Lichtwellenleiter 28 wird auf diese Art und Weise der lichtzündbare Thyristor 24 geschaltet.

In Figur 4 ist in vergrößerter Darstellung teilweise der Schnitt gemäß der Linie IV-IV in Figur 3 dargestellt. Man erkennt wiederum den Gehäusedeckel 17 mit der eingebrachten Bohrung 27. Ebenfalls ist der Ausgang des Lichtwellenleiters 28 ersichtlich, welcher in unmittelbarer Nähe zu dem Fenster 29 aus Aluminiumoxid-Saphir endet.

Die Bohrung 27 weist zum Inneren des Gehäuses eine Ausnehmung 30 mit größerem Durchmesser zur Aufnahme der Befestigungsmaterialien für das Fenster 29 auf. Das Fenster 29 aus dem Aluminiumoxid-Saphir ist als eine Scheibe ausgebildet, die an den Randbereichen mit einem hohlzylinderförmigen ersten Materialstück 31 aus einer Aluminiumoxid-Keramik verbunden ist. Das erste Materialstück 31 aus der Aluminiumoxid-Keramik wiederum ist über ein scheibenförmiges zweites Materialstück 32 aus einer Nickel/Eisen-Legierung mit dem Gehäusedeckel 17 verlötet.

Das Fenster 29 aus dem Aluminiumoxid-Saphir ist (in Figur 4 nicht näher dargestellt) über eine erste und eine zweite Verbindungsschicht 35 mit dem ersten Materialstück gemäß dem in Figur 1 gezeigten Materialverbund fest verbunden. Das erste Materialstück 31 aus der Aluminiumoxid-Keramik wiederum ist über ein Metalllot 36 mit dem Materialstück 32 aus der Nickel/Eisen-Legierung verlötet. Schließlich ist das zweite Materialstück 32 über ein Metalllot 37 mit dem Gehäusedeckel 17 verlötet. Als Metalllot ist jeweils ein Silber/Kupfer-Lot eingesetzt.

Das Fenster 29 aus dem Aluminiumoxid-Saphir weist eine Dicke von 0,55 mm auf. Das hohlzylinderförmige erste Materialstück 31 weist eine Wandstärke von 1,3 mm auf. Das scheibenförmige zweite Materialstück wiederum ist etwa 0,25 mm stark. Als Nickel/Eisen-Legierung des zweiten Materialstücks wurde die unter dem Handelsnamen Vacodil erhältliche Nickel/Eisen-Legierung der Vakuumschmelze Hanau verwendet.

Durch die Verbindung des ersten Materialstücks 31 unter einem Winkel mit dem zweiten Materialstück 32 wird eine Relativbewegung der beiden Materialstücke 31, 32 bei einer Verringerung oder einer Vergrößerung des Durchmessers der Bohrung 27 bei einer Temperaturwechselbeanspruchung des Gehäusedeckels 17 ermöglicht. Auf diese Art und Weise wird der unterschiedliche thermische Ausdehnungskoeffizient des Fensters 29 gegenüber dem Metall des Gehäusedeckels 17 kompensiert. Die Verbindung des Fensters 29 aus dem Aluminiumoxid-Saphir mit dem Gehäusedeckel 17 bleibt vakuumdicht und fest, selbst dann, wenn der Gehäusedeckel mit einer Löttemperatur von ca. 600 °C an die Isolierwandung 18 angelötet wird.

Die Verwendung des Materialverbunds gemäß Figur 1 zum Einsetzen des Fensters 29 aus dem Aluminiumoxid-Saphir in den Gehäusedeckel 17 eines Gehäuses für einen lichtzündbaren Thyristor ermöglicht zum ersten Mal eine dauerhafte, vakuumdichte und temperaturwechselbeständige Verbindung des Fensters 29 mit dem Gehäusedeckel 17 und damit eine Einkopplung von Licht über ein Fenster in das Innere des Gehäuses hinein. Es kann auf diese Art und Weise auf aufwendig gestaltete, vakuumdichte Durchführungen für den Lichtwellenleiter in das evakuierte Innere des Gehäuses verzichtet werden.

In Figur 5 schließlich ist die Verwendung des Materialverbunds gemäß Figur 1 zum direkten Einsetzen des Fensters 29 aus dem Aluminiumoxid-Saphir in die Isolierwandung 18 aus der Aluminiumoxid-Keramik gezeigt. Hierzu wird die Isolierwandung 18 an geeigneter Stelle abgeflacht und an dieser Stelle das Fenster 29 eingesetzt.

In Figur 5 ist deutlich die Aluminiumoxid-Keramik 40 der Isolierwandung 18 des in Figur 3 gezeigten Gehäuses 16 gezeigt. Die Aluminiumoxid-Keramik 40 ist über eine erste Verbindungsschicht 3 und über eine zweite Verbindungsschicht 4, wie sie in der zu Figur 1 zugehörigen Beschreibung beschrieben sind, mit dem Fenster 29 aus dem Aluminiumoxid-Saphir versintert. Der in Figur 1 gezeigte Materialverbund ermöglicht auch bei einer derartigen Verwendung eine sichere, vakuumdichte und temperaturwechselbeständige Verbindung des Fensters 29 aus dem Aluminiumoxid-Saphir mit der Aluminiumoxid-Keramik der Isolierwandung 18 des Gehäuses 16. Auf diese relativ einfache Art und Weise kann wiederum auf eine aufwendig gestaltete Durchführung des Lichtwellenleiters in das Innere zu dem lichtempfindlichen Feld des lichtzündbaren Thyristors verzichtet werden.

## Patentansprüche

1. Vakuumdichter und temperaturwechselbeständiger Materialverbund (1), wobei ein Aluminiumoxid-Saphir (2) und eine Aluminiumoxid-Keramik (5), welche in einer Glasphase eingelagertes Aluminiumoxid in einer Korund-Modifikation umfasst, über eine erste (3) und über eine zweite (4) Verbindungsschicht miteinander versintert sind, wobei die erste Verbindungsschicht (3) der Aluminiumoxid-Keramik (5) benachbart ist und ein erstes Mangan-Silikat-Glas umfasst, das mindestens eines der Metalle aus der Gruppe: Molybdän, Wolfram, Palladium und Platin enthält, und wobei die zweite Verbindungsschicht (4) dem Aluminumoxid-Saphir (2) benachbart ist und ein zweites Mangan-Silikat-Glas umfaßt, das die Oxide: Aluminiumoxid und Titandioxid in einem hoheren Gewichtsanteil als das erste Mangan-Silikat-Glas enthält.

2. Materialverbund (1) nach Anspruch 1,
wobei die Summe der Anteile der Metalle im ersten Mangan-Silikat-Glas 65 bis 85 Gew.-% beträgt.

3. Materialverbund (1) nach Anspruch 1 oder 2, wobei das erste Mangan-Silikat-Glas einen Anteil von bis zu 6 Gew.-% an Aluminiumoxid und/oder Titandioxid umfasst.

4. Materialverbund (1) nach einem der vorhergehenden Ansprüche, wobei das zweite Mangan-Silikat-Glas einen Anteil von bis zu 30 Gew.-%, insbesondere von 15 bis 25 Gew.-%, an Aluminiumoxid und/oder Titandioxid umfasst.

5. Verfahren zum Herstellen eines vakuumdichten und temperaturwechselbeständigen Materialverbunds (1) aus einem Aluminiumoxid-Saphir (2) und einer Aluminiumoxid-Keramik (5), welche in eine Glasphase eingelagertes Aluminiumoxid in einer Korund-Modifikation umfasst,
wobei
a) eine erste Siebdruckpaste (SP1) hergestellt wird durch
a1) Mischen (7) des Pulvers (G) eines ersten Mangan-Silikat-Glases mit einem Pulver (M) mindestens eines der Metalle aus der Gruppe, die Molybdän, Wolfram, Palladium und Platin enthält, zu einer Pulvermischung (P), und
a2) Versetzen (9) der Pulvermischung (P) mit einem Suspensionsmittel (S) und/oder mit einem Klebemittel (K),
wobei
b) eine zweite Siebdruckpaste (SP2) hergestellt wird durch b1) Versetzen (9) eines Pulvers (G) eines zweiten Mangan-Silikat-Glases, welches Aluminiumoxid und/oder Titandioxid in einem höheren Anteil als das erste Mangan-Silikat-Glas enthält, mit einem Suspensionsmittel (S) und/oder mit einem Klebemittel (K),
wobei
c) durch Siebdruck (10) der ersten (SP1) und der zweiten Siebdruckpaste (SP2) eine Materialabfolge Aluminiumoxid-Keramik (5), erste Verbindungsschicht (3), zweite Verbindungsschicht (4), Aluminiumoxid-Saphir (2) hergestellt wird,
und wobei abschließend
d) ein Brennvorgang (14) bei 1200 bis 1500 °C erfolgt.

6. Verfahren nach Anspruch 5, wobei das Pulver (M) des mindestens einen Metalls mit einem Anteil von 65 bis 85 Gew.-%, bezogen auf die Pulvermischung (P), zugemischt wird.

7. Verfahren nach Anspruch 5 oder 6, wobei dem Pulver (G) des Mangan-Silikat-Glases zur Herstellung der ersten Siebdruckpaste (SP1) zusätzlich ein Pulver von Aluminiumoxid, Titandioxid und/oder Titanhydrid mit einem Anteil von bis zu 6 Gew.-% zugemischt wird.

8. Verfahren nach einem der Ansprüche 5 bis 7,
wobei dem Pulver (G) des Mangan-Silikat-Glases der zweiten Siebdruckpaste (SP2) ein Pulver von Aluminiumoxid, Titandioxid und/oder Titanhydrid mit einem Anteil von bis zu 30 Gew.-%, insbesondere von 15 bis 25 Gew.-%, zugemischt wird.

9. Verfahren nach einem der Ansprüche 5 bis 8, wobei nach dem Siebdruck (10) der ersten Siebdruckpaste (SP1) ein separater Brennvorgang (11) bei 1200 bis 1500 °C erfolgt und nach dem Siebdruck (12) der zweiten Siebdruckpaste (SP2) ein separater Brennvorgang (11) bei 1200 bis 1500 °C erfolgt, oder wobei nach dem Siebdruck (10) der ersten Siebdruckpaste (SP1) ein separater Brennvorgang (11) bei 1200 bis 1500 °C erfolgt, oder wobei nach dem Siebdruck (12) der zweiten Siebdruckpaste (SP2) ein separater Brennvorgang (11) bei 1200 bis 1500 °C erfolgt.

10. Verfahren nach einem der Ansprüche 5 bis 9, wobei das Pulver (G) des ersten/oder zweiten Mangan-Silikat-Glases mit einer mittleren Korngröße von weniger als 10 µm, insbesondere von weniger als 2 µm, verwendet wird.

11. Verfahren nach einem der Ansprüche 5 bis 10, wobei das Pulver (M) mit einer mittleren Korngröße von weniger als 15 µm, insbesondere von weniger als 5 µm, verwendet wird.

12. Verfahren nach einem der Ansprüche 5 bis 11, wobei als Suspensionsmittel (S) Pflanzenöl, insbesondere Terpineolöl, verwendet wird.

13. Verfahren nach einem der Ansprüche 5 bis 12, wobei als Klebemittel (K) Ethylzellulose verwendet wird.

14. Verfahren nach einem der Ansprüche 5 bis 13, wobei die erste Siebdruckpaste (SP1) mit einer Dicke von 2 bis 20 µm aufgetragen wird.

15. Verfahren nach einem der Ansprüche 5 bis 14, wobei die zweite Siebdruckpaste (SP2) mit einer Dicke von 2 bis 200 µm aufgetragen wird.

16. Verwendung des Materialverbunds (1) nach einem der Anspruche 1 bis 5 zum Einsetzen eines Fensters (29) aus dem Aluminiumoxid-Saphir (2) in ein Gehäuse (16) für einen lichtzundbaren Thyristor (24).

17. Verwendung nach Anspruch 16, wobei das Gehäuse (16) einen Teilbereich (18) aus Aluminiumoxid-Keramik (5) umfasst, in welchen das Fenster (29) eingesetzt wird, und wobei das Fenster (29) an seinen Randbereichen über die erste (3) und die zweite Verbindungsschicht (4) mit der Aluminiumoxid-Keramik (5) fest verbunden wird.

18. Verwendung nach Anspruch 16, wobei das Gehause (16) einen Teilbereich (17, 19) aus einem ersten Metall umfasst, in welchen das Fenster (29) eingesetzt wird, wobei das Fenster (29) an seinen Randbereichen über die erste (3) und die zweite Verbindungsschicht (4) fest mit einem ersten Materialstück (31) aus Aluminiumoxid-Keramik (5) verbunden wird, und wobei das erste Materialstuck (31) über ein Metalllot (36) fest mit dem ersten Metall des Gehäuse-Teilbereichs (17) verlötet wird.

19. Verwendung nach Anspruch 16, wobei das Gehäuse (16) einen Teilbereich (17, 19) aus einem ersten Metall umfasst, in welchen das Fenster (29) eingesetzt wird, wobei das Fenster (29) an seinen Randbereichen über die erste (3) und die zweite Verbindungsschicht (4) fest mit einem ersten Materialstück (31) aus Aluminiumoxid-Keramik (5) verbunden wird, wobei das erste Materialstück (31) über ein Metalllot (36) fest mit einem zweiten Materialstück (32) aus einem zweiten Metall verbunden wird, und wobei das zweite Materialstück (32) über ein Metalllot (37) mit dem ersten Metall des Gehäuse-Teilbereichs (17) verlötet wird.

20. Verwendung nach Anspruch 19, wobei als erstes Metall Kupfer und als zweites Metall eine Nickel/Eisen-Legierung verwendet wird.

## Claims

1. A vacuum-tight material composite (1) which is resistant to changes in temperature, in which an aluminium oxide sapphire (2) and an aluminium oxide ceramic (5) which has an aluminium oxide included in a glass phase in a corundum modification are sintered to one another by way of a first connecting layer (3) and a second connecting layer (4), in which the first connecting layer (3) is adjacent to the aluminium oxide ceramic (5) and has a first manganese silicate glass which contains at least one of the metals from the group comprising: molybdenum, tungsten, palladium and platinum, and in which the second connecting layer (4) is adjacent to the aluminium oxide sapphire (2) and has a second manganese silicate glass which contains the oxides comprising: aluminium oxide and titanium dioxide, in a higher proportion by weight than the first manganese silicate glass.

2. A material composite (1) according to Claim 1, in which the total proportion of metals in the first manganese silicate glass is 65 to 85% by weight.

3. A material composite (1) according to Claim 1 or 2, in which the first manganese silicate glass includes a proportion of up to 6% by weight of aluminium oxide and/or titanium dioxide.

4. A material composite (1) according to one of the preceding claims, in which the second manganese silicate glass includes a proportion of up to 30% by weight, in particular from 15 to 25% by weight, of aluminium oxide and/or titanium dioxide.

5. A process for making a vacuum-tight material composite (1) which is resistant to changes in temperature from an aluminium oxide sapphire (2) and an aluminium oxide ceramic (5) which has an aluminium oxide included in a glass phase in a corundum modification,
in which
a) a first screen printing paste (SP1) is made by
a1) mixing (7) the powder (G) of a first manganese silicate glass with a powder (M) of at least one of the metals from the group comprising molybdenum, tungsten, palladium and platinum to give a powder mixture (P), and
a2) adding (9) to the powder mixture (P) a suspending medium (S) and/or an adhesive (K),
during which
b) a second screen printing paste (SP2) is made by
b1) adding (9) to a powder (G) of a second manganese silicate glass which contains aluminium oxide and/or titanium dioxide, in a higher proportion than the first manganese silicate glass, a suspending medium (S) and/or an adhesive (K),
in which
c) by screen printing (10) the first screen printing paste (SP1) and the second screen printing paste (SP2) a sequence of materials comprising aluminium oxide ceramic (5), first connecting layer (3), second connecting layer (4) and aluminium oxide sapphire (2) is made,
and in which finally
d) a firing procedure (14) is carried out at 1200 to 1500°C.

6. A process according to Claim 5, in which the powder (M) of the at least one metal is mixed in in a proportion of 65 to 85% by weight in relation to the powder mixture (P).

7. A process according to Claim 5 or 6, in which a powder of aluminium oxide, titanium dioxide and/or titanium hydride in a proportion of up to 6% by weight is additionally mixed into the powder (G) of manganese silicate glass for making the first screen printing paste (SP1).

8. A process according to one of Claims 5 to 7, in which a powder of aluminium oxide, titanium dioxide and/or titanium hydride in a proportion of up to 30% by weight, in particular from 15 to 25% by weight, is mixed into the powder (G) of manganese silicate glass of the second screen printing paste (SP2).

9. A process according to one of Claims 5 to 8, in which after the screen printing (10) with the first screen printing paste (SP1) a separate firing procedure (11) is carried out at 1200 to 1500°C and after the screen printing (12) with the second screen printing paste (SP2) a separate firing procedure (11) is carried out at 1200 to 1500°C, or in which after the screening printing process (10) with the first screen printing paste (SP1) a separate firing procedure (11) is carried out at 1200 to 1500°C, or in which after the screen printing (12) with the second screen printing paste (SP2) a separate firing procedure (11) is carried out at 1200 to 1500°C.

10. A process according to one of Claims 5 to 9, in which the powder (G) of the first and/or second manganese silicate glass is used in an average particle size of less than 10 µm, in particular less than 2 µm.

11. A process according to one of Claims 5 to 10, in which the powder (M) is used in an average particle size of less than 15 µm, in particular less than 5 µm.

12. A process according to one of Claims 5 to 11, in which vegetable oil, in particular terpineol oil, is used as the suspending medium (S).

13. A process according to one of Claims 5 to 12, in which ethyl cellulose is used as the adhesive (K).

14. A process according to one of Claims 5 to 13, in which the first screen printing paste (SP1) is applied in a thickness of 2 to 20 µm.

15. A process according to one of Claims 5 to 14, in which the second screen printing paste (SP2) is applied in a thickness of 2 to 200 µm.

16. Use of the material composite (1) according to one of Claims 1 to 5 for inserting a window (29) comprising the aluminium oxide sapphire (2) in a housing (16) for a light pulse firing thyristor (24).

17. Use according to Claim 16, in which the housing (16) has a part region (18) comprising aluminium oxide ceramic (5) into which the window (29) is inserted, and in which the window (29) is fixedly connected at its edge regions to the aluminium oxide ceramic (5) by way of the first connecting layer (3) and the second connecting layer (4).

18. Use according to Claim 16, in which the housing (16) has a part region (17, 19) comprising a first metal into which the window (29) is inserted, in which the window (29) is fixedly connected at its edge regions to a first material piece (31) comprising aluminium oxide ceramic (5) by way of the first connecting layer (3) and the second connecting layer (4), and in which the first material piece (31) is fixedly soldered to the first metal of the housing part region (17) by way of a metal solder (36).

19. Use according to Claim 16, in which the housing (16) has a part region (17, 19) comprising a first metal into which the window (29) is inserted, in which the window (29) is fixedly connected at its edge regions to a first material piece (31) comprising aluminium oxide ceramic (5) by way of the first connecting layer (3) and the second connecting layer (4), in which the first material piece (31) is fixedly connected to a second material piece (32) comprising a second metal by way of a metal solder (36), and in which the second material piece (32) is soldered to the first metal of the housing part region (17) by way of a metal solder (37).

20. Use according to Claim 19, in which copper is used as the first metal and a nickel/iron alloy is used as the second metal.

## Revendications

1. Matériau (1) composite étanche au vide et résistant aux variations de température, dans lequel un saphir (2) d'oxyde d'aluminium et une céramique (5) d'oxyde d'aluminium, qui comprend de l'oxyde d'aluminium sous une forme de corindon incorporé dans une phase vitreuse, sont frittés entre eux par l'intermédiaire d'une première (3) et d'une deuxième (4) couche de liaison, la première couche (3) de liaison étant voisine de la céramique (5) d'oxyde d'aluminium et comprenant un premier verre au manganèse-silicate qui contient au moins l'un des métaux du groupe : molybdène, tungstène, palladium et platine, et la deuxième couche (4) de liaison étant voisine du saphir (2) d'oxyde d'aluminium et comprenant un deuxième verre au manganèse-silicate, qui contient les oxydes : oxyde d'aluminium et dioxyde de titane en une proportion en poids plus grande que le premier verre en manganèse-silicate.

2. Matériau (1) composite suivant la revendication 1,
dans lequel la somme des proportions des métaux dans le premier verre au manganèse-silicate est comprise entre 65 et 85% en poids.

3. Matériau (1) composite suivant la revendication 1 ou 2, dans laquelle le premier verre au manganèse-silicate a une proportion allant jusqu'à 6% en poids d'oxyde d'aluminium et / ou de dioxyde de titane.

4. Matériau (1) composite suivant l'une des revendications précédentes, dans lequel le deuxième verre au manganèse-silicate comprend une proportion allant jusqu'à 30% en poids, notamment de 15 à 25% en poids d'oxyde d'aluminium et/ou de dioxyde de titane.

5. Procédé de production d'un matériau (1) composite étanche au vide et résistant aux variations de température, en un saphir (2) d'oxyde d'aluminium et en une céramique (5) d'oxyde d'aluminium, qui comprend de l'oxyde d'aluminium sous une forme de corindon incorporé dans une phase vitreuse,
dans lequel,
a) on produit une première pâte (SP1) de sérigraphie par :
a1) mélange (7) de la poudre (G) d'un premier verre au manganèse-silicate à une poudre (M) d'au moins l'un métaux du groupe qui contient le molybdène, le tungstène, le palladium et le platine, pour obtenir un mélange (P) de poudre
et,
a2) mélange (9) du mélange (G) de poudre à un agent (S) de mise en suspension et / ou à un agent (K) adhésif,
dans lequel,
b) on produit une deuxième pâte (SP2) de sérigraphie par :
b1) mélange (9) d'une poudre (G) d'un deuxième verre au manganèse-silicate qui contient de l'oxyde d'aluminium et / ou du dioxyde de titane en une proportion plus grande que le premier verre au manganèse-silicate, à un agent (S) de mise en suspension et / ou à un agent (K) adhésif,
dans lequel,
c) on produit par sérigraphie (10) de la première (SP1) et de la deuxième (SP2) pâte de sérigraphie, une succession de matière céramique (5) d'oxyde d'aluminium, première couche (3) de liaison, deuxième couche (4) de liaison, saphir (2) d'oxyde d'aluminium,
et enfin,
d) on effectue une opération (14) de calcination entre 1200° et 1500° C.

6. Procédé suivant la revendication 5, dans lequel on mélange la poudre (M) du au moins un métal en une proportion représentant de 65 à 85% du poids du mélange (P) de poudre.

7. Procédé suivant la revendication 5 ou 6, dans lequel on mélange à la poudre (G) du verre au manganèse-silicate de production de la première pâte (SP1) de sérigraphie, en outre une poudre d'oxyde d'aluminium, de dioxyde de titane et / ou d'hydrure de titane, en une proportion allant jusqu'à 6% en poids.

8. Procédé suivant l'une des revendications 5 à 7, dans lequel on mélange à la poudre (G) du verre au manganèse-silicate de la deuxième pâte (SP2) de sérigraphie une poudre d'oxyde de dioxyde, de dioxyde de titane et / ou d'hydrure de titane en une proportion allant jusqu'à 30% en poids notamment, de 15 à 25% en poids.

9. Procédé suivant l'une des revendications 5 à 8, dans lequel après la sérigraphie (10) de la première pâte (SP1) de sérigraphie, on effectue une opération (11) distincte de calcination entre 1200° et 1500° C, et après la sérigraphie (12) de la deuxième pâte (SP2) de sérigraphie, on effectue une opération (11) distincte de calcination entre 1200° et 1500° C, ou dans lequel après la sérigraphie (10) de la première pâte (SP1) de sérigraphie, on effectue une opération (11) distincte de calcination entre 1200° et 1500° C ou dans lequel, après la sérigraphie (12) de la deuxième pâte (SP2) de sérigraphie, on effectue une opération (11) distincte de calcination entre 1200° et 1500° C.

10. Procédé suivant l'une des revendications 5 à 9, dans lequel on utilise la poudre (G) du premier / ou deuxième verre au manganèse-silicate ayant une granulométrie moyenne de moins de 10 µm, notamment de moins de 2 µm.

11. Procédé suivant l'une des revendications 5 à 10, dans lequel on utilise la poudre (M) ayant une granulométrie moyenne de moins de 15 µm notamment de 5 µm.

12. Procédé suivant l'une des revendications 5 à 11, dans lequel on utilise comme agent (S) de suspension une essence végétale, notamment de l'essence de muguet.

13. Procédé suivant l'une des revendications 5 à 12, dans lequel on utilise comme agent (K) adhésif de l'éthylcellulose.

14. Procédé suivant l'une des revendications 5 à 13, dans lequel on dépose la première pâte (SP1) de sérigraphie en une épaisseur de 2 à 20 µm.

15. Procédé suivant l'une des revendications 5 à 14, dans lequel on dépose la deuxième pâte (SP2) de sérigraphie en une épaisseur de 2 à 200 µm.

16. Utilisation du matériau (1) composite suivant l'une des revendications 1 à 5, pour l'insertion d'une fenêtre (29) en le saphir (2) d'oxyde d'aluminium, dans un boîtier (16), pour un thyristor (24) pouvant être amorcé par de la lumière.

17. Utilisation suivant la revendication 16, dans laquelle le boîtier (16) comprend une sous partie (18) en céramique (15) d'oxyde d'aluminium, dans laquelle la fenêtre (29) est insérée, et la fenêtre (29) est reliée rigidement, sur ses parties de bords, à la céramique (5) d'oxyde d'aluminium par la première (3) et la deuxième couche (4) de liaison.

18. Utilisation suivant la revendication 16, dans laquelle le boîtier (16) comprend une sous partie (17, 19) en un premier métal, dans lequel la fenêtre (29) est insérée, la fenêtre (29) étant reliée, sur ses parties de bords, à une première pièce (31) de matériau en céramique (5) d'oxyde d'aluminium par l'intermédiaire des première (3) et deuxième (4) couche de liaison et la première pièce (31) de matériau étant brasée par une brasure (6) métallique solidement au premier métal de la sous partie (17) du boîtier.

19. Utilisation suivant la revendication 16, dans lequel le boîtier (16) comprend une sous partie (17, 19) en un premier métal, dans lequel la fenêtre (29) est insérée, la fenêtre (29) étant reliée sur ses parties de bords solidement à une première pièce (31) de matériau en céramique (5) d'oxyde d'aluminium, par l'intermédiaire de la première (3) et de la deuxième (4) couche de liaison, la première pièce (31) en matériau étant reliée rigidement par une brasure (36) métallique à une deuxième pièce (32) de matériau en un deuxième métal, et la deuxième pièce (32) de matériau étant brasée par une brasure (37) métallique, au premier métal de la sous-partie (37) du boîtier.

20. Utilisation suivant la revendication 19, dans laquelle on utilise comme premier métal du cuivre et comme deuxième métal un alliage de nickel et de fer.
